# EUROPÄISCHE PATENTANMELDUNG

(11) **EP 1 444 879 A1**
(43) Veröffentlichungstag der Anmeldung: **11.08.2004**
(21) Anmeldenummer: 04001273.4
(22) Anmeldetag: 22.01.2004
(51) Int. Cl.: A01B 79/00

(54) **Vorrichtung zum Bearbeiten und/oder Bestellen von landwirtschaftlichen Flächen**

(30) Priorität: 30.01.2003 DE 10303516
(71) Anmelder: Amazonen-Werke H. Dreyer GmbH & Co. KG, 49205 Hasbergen (DE)
(72) Erfinder: Scheufler, Bernd, Dr., 49205 Hasbergen (DE); Marquering, Johannes, Dr., 49176 Borgloh (DE)

(57) **Zusammenfassung**

Vorrichtung zum beim Bearbeiten und/oder Bestellen von landwirtschaftlichen Flächen mittels Arbeitswerkzeuge und/oder Verteileinrichtungen aufweisenden Bodenbearbeitungswerkzeugen und/oder Verteileinrichtungen aufweisenden Bodenbearbeitungs- und/oder Bestellmaschinen, wie beispielsweise Sämaschinen, Feldspritzen, etc, wobei ein einen in Fahrtrichtung gesehen vorzugsweise in Maschinenmitte angeordneten GPS-Empfänger aufweisendes Standortbestimmungssystem zur Ermittlung der aktuellen und tatsächlichen Position der Maschine auf dem Feld .Um ohne aufwendige Korrekturmaßnahmen im Programm vornehmen zu können, eine standortgenaue Bestimmung der Verteileinrichtung oder Arbeitswerkzeuge zu ermöglichen, ist vorgesehen, dass der GPS-Empfänger zumindest annähernd senkrecht oberhalb der Arbeitswerkzeuge und/oder Verteileinrichtung angeordnet ist.

## Beschreibung

Die Erfindung betrifft eine Vorrichtung gemäß der Oberbegriffe der Patenansprüche 1, 2 und 3.

Durch die deutsche Offenlegungsschrift 196 48 223 ist eine Vorrichtung gemäß des Oberbegriffes des Patentanspruches 1 bekannt. Bei dieser Vorrichtung, die aus einem Ackerschlepper und einer an dem Ackerschlepper angekuppelten Verteilmaschine besteht, ist der GPS-Empfänger auf der Schlepperkabine angeordnet. Durch diese Anordnung ist der GPS-Empfänger in einem größeren Abstand zu den Arbeitswerkzeugen bzw. der Verteileinrichtung angeordnet. Hierdurch ergeben sich Ungenauigkeiten bei der GPS-gesteuerten Regelung und Aufzeichnung der Ausbringmenge.

Die deutsche Offenlegungsschrift 199 21 995 zeigt eine Vorrichtung zum Anschlussfahren benachbarter Bearbeitungsund/oder Bestellstreifen gemäß der Oberbegriffe der Patentansprüche 2 und 3. Bei dieser Vorrichtung ist der GPS-Empfänger auf der Schlepperkabine des die Bodenbearbeitungs- bzw. Bestellmaschine tragenden Schleppers angeordnet. Der GPS-Empfänger befindet sich in einem größeren Abstand zu den Arbeitswerkzeugen bzw. Verteileinrichtungen. Hierdurch wird beim teilflächenspezifischen Ausbringen von Material bzw. beim standortgestützten Aufzeichnen von Daten eine Ungenauigkeit in Kauf genommen.

Der Erfindung liegt die Aufgabe zugrunde, ohne aufwendige Korrekturmaßnahmen im Computer-Auswerte-Programm vornehmen zu können, eine standortgenaue Bestimmung der Verteileinrichtung oder Arbeitswerkzeuge zu ermöglichen.

Bei einer Vorrichtung gemäß des Oberbegriffes des Patentanspruches 1 wird diese Aufgabe dadurch gelöst, dass der GPS-Empfänger zumindest annähernd senkrecht oberhalb der Arbeitswerkzeuge und/oder Vereinrichtung angeordnet ist. Infolge dieser Maßnahme erfolgt eine sehr genaue standortgestützte Aufzeichnung von Verteildaten und/oder Leistungsdaten bzw. eine sehr genaue Einstellung der Arbeitswerkzeuge oder Verteilorgane entsprechend der in einer Applikations- oder Arbeitskarte hinterlegten Daten. Der bei herkömmlichen System vorhandene Versatz des GPS-Empfängers gegenüber den Arbeitswerkzeugen oder Verteileinrichtungen ist durch die erfindungsgemäße Maßnahme in einfachster Weise ausgeschaltet.

Bei einer Vorrichtung gemäß des Oberbegriffes des Patentanspruches 2 wird die Aufgabe dadurch gelöst, dass der GPS-Empfänger zumindest annähernd senkrecht oberhalb der Arbeitswerkzeuge und/oder Verteileinrichtung angeordnet ist. Infolge dieser Maßnahmen werden bei einem GPS gestützten Anschlussverfahren eine genaue Führung der Verteilorgane und Arbeitswerkzeuge entlang des Feldrandes bzw. des vorher bearbeiteten Feldstreifens gewährleistet. Der örtliche Versatzabstand wird ausgeschaltet, die Fahrtrichtung des Schleppers wird somit direkt in Abhängigkeit von der Position der Arbeitswerkzeuge und der Verteileinrichtung gesteuert. Auch kann zusätzlich zu dem Lenkeinschlag das Anbaugerät oder Anhängegerät über die Verbindung zwischen Schlepper und Anhänge- oder Anbaugerät zum genauen Anschlussfahren verschoben werden.

Hierzu ist ein Sensor zur Erfassung z.B. der Deichselposition vorgesehen. Über einen Hydraulikzylinder, der zwischen der Deichsel und dem Anhängegerät angeordnet ist, kann die Deichselposition geändert werden, so dass genaues Anschlussfahren der Verteileinrichtung und Arbeitswerkzeuge automatisch gegeben ist.

Zum Parallelfahren der Maschine zur vorherigen Spur wird das Signal des maschinenseitigen GPS-Empfängers ausgewertet. Der Schlepperfahrer bekommt zusätzlich zur Navigationsinformation eine Information über die Stellung der Deichsel und muss evtl. zusätzlich aufgrund dieser Positionen die Position des Schleppers korrigieren. Auf dem Terminal wird auf der Anzeigevorrichtung der Lenkwinkel des Traktors und die aktuelle Maschinenposition angezeigt.

Eine weitere Lösung der Aufgabe wird durch die kennzeichnenden Merkmale des Patentanspruches 3 erreicht. Infolge dieser Maßnahmen kann die Deichselsteuerung für das Hangfahren und für das Vorgewendemanagement nachgebildet werden. Der Traktor wird als Navigationspunkt genommen und es wird versucht, das Anhängegerät, beispielsweise eine gezogene Feldspritze in der Spur des Traktors zu halten. Am Hang kann eine Korrektur durch einen Neigungssensor erforderlich sein.

Weitere Einzelheiten der Erfindung sind der Beispielsbeschreibung und den Zeichnungen zu entnehmen. Hierbei zeigen
- Fig. 1: einen Ackerschlepper mit Verteilmaschine und Positionsbestimmungseinrichtung in Seitenansicht und in Prinzipdarstellung,
- Fig. 2: eine weitere Verteilmaschine mit einem Ackerschlepper und mit Positionsbestimmungssystem in der Draufsicht, in Prinzipdarstellung und
- Fig. 3: eine weitere Verteilmaschine mit Ackerschlepper und mit Positionsbestimmungssystem in der Draufsicht in Prinzipdarstellung.

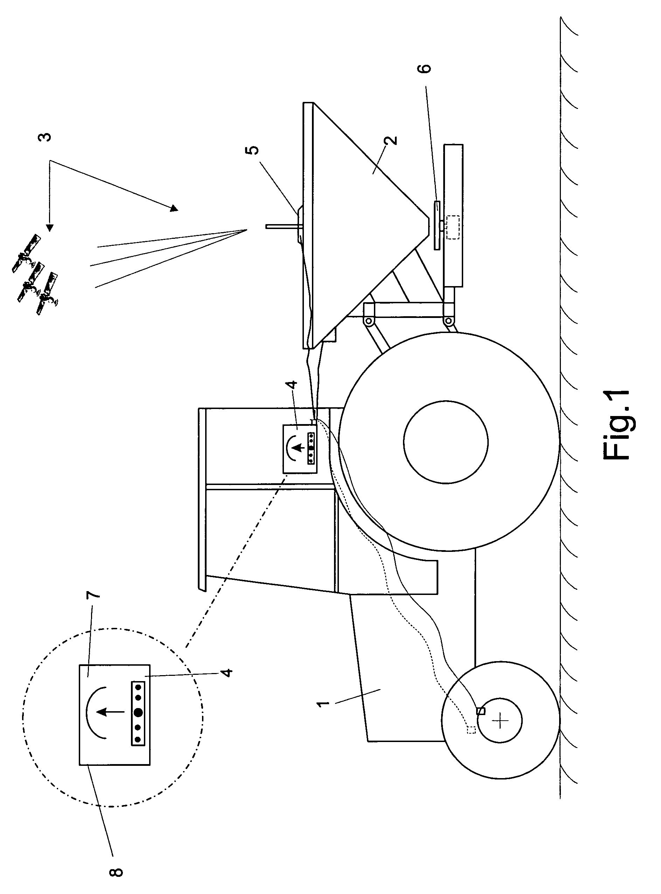

Die Fig. 1 zeigt schematisch in Prinzipdarstellung einen Ackerschlepper 1 mit einer als Zentrifugaldüngerstreuer 2 ausgebildeten Verteilmaschine, die über Dreipunktkupplungselemente an dem Dreipunktkraftheber des Ackerschleppers 1 angebaut ist. Diese aus Ackerschlepper 1 und Verteilmaschine 2 bestehende Vorrichtung zum Bestellen von landwirtschaftlichen Flächen weist ein Standortbestimmungssystem 3 auf, welches mit einem GPS-Empfänger ausgestattet ist. Das Standortbestimmungssystem 3 ist zur Ermittlung der aktuellen und tatsächlichen Position der Maschine auf dem Feld bestimmt. Das Standortbestimmungssystem 3 weist einen Bordcomputer auf, der mit dem Standortbestimmungssystem 3 in Verbindung steht. Mittels dieses Bordcomputers 4 kann die Ausbringmenge der Verteilmaschine entsprechend einer im Bordcomputer 4 hinterlegten Applikationskarte eingestellt werden, so dass teilflächenspezifisch in gewünschter Weise das Material ausgebracht wird. Des weiteren ist es möglich, die tatsächlich ausgebrachte Materialmenge standortspezifisch auf einem Speichermedium des Bordcomputers 4 abzuspeichern. Der GPS-Empfänger 5 des Standortbestimmungssystem 3 ist zumindest annähernd senkrecht oberhalb der als Schleuderscheibe ausgebildeten Verteileinrichtung 4 angebracht. Durch die Positionierung des GPS-Empfängers 5 bzw. deren Antennen senkrecht oberhalb der Arbeitswerkzeuge bzw. der Verteileinrichtung 6 der landwirtschaftlichen Maschine 2 erfolgt eine exakte Zuordnung der tatsächlichen Position der Arbeitswerkzeuge und der Verteileinrichtung 6 auf dem Feld und der von der Antenne 5 des GPS-Empfängers aufgenommenen Daten des GPS-Empfängers.

Diese Vorrichtung eignet sich einerseits zum teilflächenspezifischen ansteuern der Arbeits- oder Verteil-6 bzw. Dosierorgane der landwirtschaftlichen Maschine 2, sowie zum genauen Anschlussfahren benachbarter Bearbeitungsoder Bestellstreifen bearbeiten und/oder bestellen von landwirtschaftlichen Flächen mittels Arbeitswerkzeuge und/oder Verteileinrichtungen 6 aufweisenden Bodenbearbeitungswerkzeugen oder Verteileinrichtung aufweisenden Bodenbearbeitungs- und/oder Bestellmaschinen 6.

Zum Anschlussfahren weist das Display 7 des Bordcomputers 4 eine Anzeigevorrichtung 8 zur visuellen Anzeige der einzuhaltenden Fahrspur oder des Lenkradeinschlages auf, wie die in der vergrößerten Darstellung des Bordcomputers 4 in schematischer Darstellung gezeigt ist.

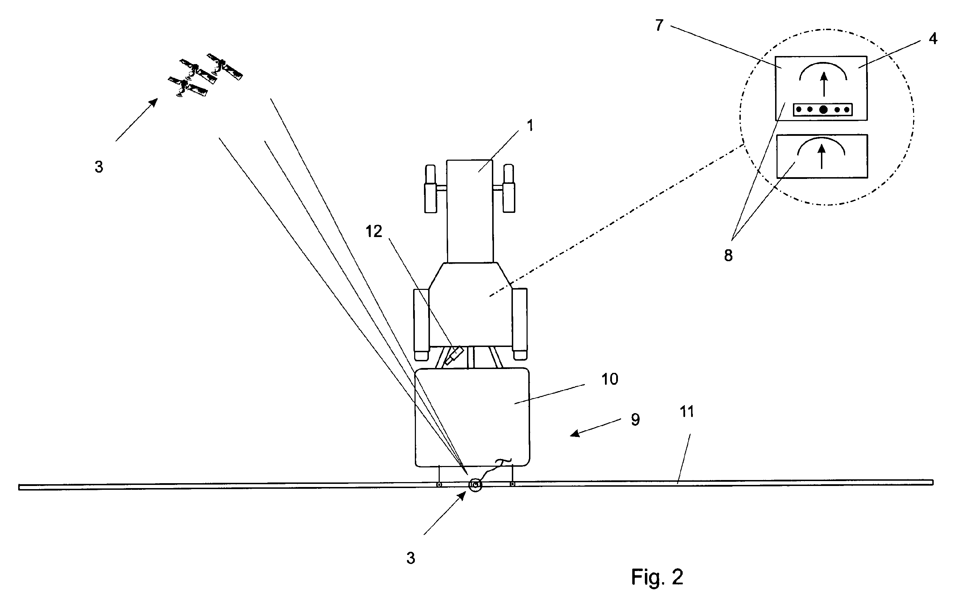

Die Fig. 2 zeigt eine als Feldspritze 9 ausgebildete Verteilermaschine, die an den Dreipunktkraftheber eines Ackerschleppers 1 angekuppelt ist. Die Feldspritze 9 weist den Vorratsbehälter 10 und das Verteilergestänge 11 sowie nicht dargestellte Armaturen, Pumpen und Leitungen auf. Der GPS-Empfänger des Standortbestimmungssystems bzw. dessen Antennen 5 ist senkrecht oberhalb des Spritzgestänges 11 in Maschinenmitte angeordnet. Um, auch beim Abweichen des Ackerschleppers von der einzuhaltenden Spur, das Spritzgestänge 11 im vorgesehenen Bereich zur genauen Anschlusshaltung an die vorhergehende Bestellbahn sicher zu stellen, ist zwischen dem Ackerschlepper 1 und der Feldspritze 9 ein Stellzylinder 12 angeordnet, mittels welchem die Feldspritze 9 gegenüber den Ackerschlepper 1 seitlich verstellbar ist. Es ist auch denkbar, die Verstelleinrichtung zwischen dem Rahmen der Feldspritze 9 und dem Spritzgestänge 11 anzuordnen.

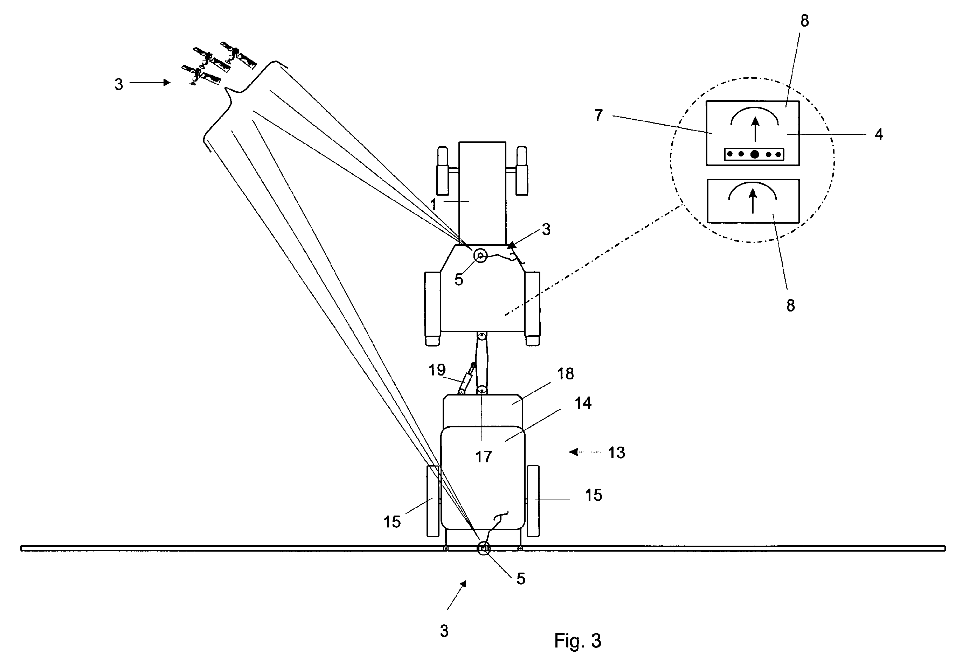

Bei dem Ausführungsbeispiel nach Fig. 3 besteht die Vorrichtung zum Anschlussfahren benachbarter Bearbeitungs- oder Bestellmaschine aus dem Ackerschlepper 1 und einer angehängten Verteilmaschine 13, beispielsweise einer Feldspritze 13. Die Feldspritze 13 weist den Vorratsbehälter 14, das Fahrwerk 15, das Spritzgestänge 11 und die Zugdeichsel 16 auf. Die Zugdeichsel 16 ist mittels eines Gelenkes 17 an dem Rahmen 18 der Feldspritze 13 befestigt. Zwischen dem Rahmen 18 der Feldspritze 13 und der Zugdeichsel 16 ist der Einstellzylinder 19 angeordnet. Sowohl auf dem Ackerschlepper 1 wie auch oberhalb der Arbeits- bzw. Verteilorgane 11 der als Feldspritze 13 ausgebildeten Verteilmaschine ist eine GPS-Antenne 5 des GPS-Empfängers eines Standort- und Bestimmungssystems 3 angeordnet. Dieses Standortbestimmungssystem 3 arbeitet mit einer elektronischen Einrichtung, beispielsweise einem Bordcomputer 4 zusammen. Der Bordcomputer 4 weist das dargestellte Display 7 auf. Auf diesem Display 7 ist eine Anzeigevorrichtung 8 zur visuellen Anzeige der einzuhaltenden Fahrspur und des Lenkradeinschlages angeordnet. Die Standortbestimmungsdaten der beiden GPS-Empfänger bzw. GPS-Antennen 5 werden mittels eines in dem Speichermedium des Standortbestimmungssystem abgespeicherten Programms verarbeitet, und zwar derart, dass die Maschine 13 und deren Arbeitswerkzeuge und/oder der Verteileinrichtung 11 bei Abweichung von den vorgesehenen Bearbeitungsstreifen gegenüber dem Schlepper 1 mittels des zwischen der Zugdeichsel 16 und dem Rahmen 18 der Verteilmaschine 13 angeordneten Verstellmittels 19 verstellbar ist. Durch die beiden GPS-Antennen 5 des Standortbestimmungssystem kann die Deichselsteuerung für das Hangfahren und das Vorgewendemanagement in vorteilhafter Weise nachgebildet werden, und zwar aufgrund der tatsächlich ermittelten Standortbestimmungsdaten, die von dem Standortbestimmungssystem ermittelt werden. Der Traktor 1 wird hierbei als Navigationspunkt genommen und das Anhängegerät 13, in diesem Falle die Feldspritze wird in der Spur des Traktors aufgrund der online ermittelten Standortbestimmungsdaten geführt. Am Hang kann eine Korrektur über einen nicht dargestellten Neigungssensor erforderlich sein.

## Patentansprüche

1. Vorrichtung zum beim Bearbeiten und/oder Bestellen von landwirtschaftlichen Flächen mittels Arbeitswerkzeuge und/oder Verteileinrichtungen aufweisenden Bodenbearbeitungswerkzeugen und/oder Verteileinrichtungen aufweisenden Bodenbearbeitungs- und/oder Bestellmaschinen, wie beispielsweise Sämaschinen, Feldspritzen, etc, wobei ein einen in Fahrtrichtung gesehen vorzugsweise in Maschinenmitte angeordneten GPS-Empfänger aufweisendes Standortbestimmungssystem zur Ermittlung der aktuellen und tatsächlichen Position der Maschine (2,13) auf dem Feld **dadurch gekennzeichnet, dass** der GPS-Empfänger (5) zumindest annähernd senkrecht oberhalb der Arbeitswerkzeuge und/oder Verteileinrichtung (6,11) angeordnet ist.

2. Vorrichtung zum Anschlussfahren benachbarter Bearbeitungsund/oder Bestellstreifen beim Bearbeiten und/oder Bestellen von landwirtschaftlichen Flächen mittels Arbeitswerkzeuge und/oder Verteileinrichtungen aufweisenden Bodenbearbeitungswerkzeugen und/oder Verteileinrichtungen aufweisenden Bodenbearbeitungs- und/oder Bestellmaschinen, wie beispielsweise Sämaschinen, Feldspritzen, etc, wobei ein einen in Fahrtrichtung gesehen vorzugsweise in Maschinenmitte angeordneten GPS-Empfänger aufweisendes Standortbestimmungssystem zur Ermittlung der aktuellen und tatsächlichen Position der Maschine auf dem Feld und eine Anzeigevorrichtung zur visuellen Anzeige der einzuhaltenden Fahrspur und/oder des Lenkradeinschlages, **dadurch gekennzeichnet, dass** der GPS-Empfänger (5) zumindest annähernd senkrecht oberhalb der Arbeitswerkzeuge und/oder Verteileinrichtung (6,11) angeordnet ist.

3. Vorrichtung zum Anschlussfahren benachbarter Bearbeitungsund/oder Bestellstreifen beim Bearbeiten und/oder Bestellen von landwirtschaftlichen Flächen mittels eines Schlepper gezogenen oder getragenen und Arbeitswerkzeuge und/oder Verteileinrichtungen aufweisenden Bodenbearbeitungswerkzeugen und/oder Verteileinrichtungen aufweisenden Bodenbearbeitungsund/oder Bestellmaschinen, wie beispielsweise Sämaschinen, Feldspritzen, etc, wobei ein einen in Fahrtrichtung gesehen vorzugsweise in Maschinenmitte auf dem Schlepper angeordneten GPS-Empfänger aufweisendes Standortbestimmungssystem zur Ermittlung der aktuellen und tatsächlichen Position der Maschine auf dem Feld und eine Anzeigevorrichtung zur visuellen Anzeige der einzuhaltenden Fahrspur und/oder des Lenkradeinschlages, **dadurch gekennzeichnet, dass** ein weiterer GPS-Empfänger (5) zumindest annähernd senkrecht oberhalb der Arbeitswerkzeuge und/oder Verteileinrichtung (6,11) angeordnet ist, dass die Standortbestimmungsdaten der beiden GPS-Empfänger (5) mittels eines in dem Speichermedium des Standortbestimmungssystem abgespeicherten Programms verarbeitet werden und zwar derart, dass die Maschine (2,13) und/oder deren Arbeitswerkzeuge und/der der Verteileinrichtung (6,11) bei Abweichung von dem vorgesehenen Bearbeitungsstreifen gegenüber dem Schlepper mittels geeigneter Verstellmittel (19) verstellbar sind.

4. Vorrichtung nach Anspruch 2, **dadurch gekennzeichnet, dass** ein Neigungssensor zur Korrektur der GPS-Daten bei Arbeiten am Hang vorgesehen ist.
